# EUROPEAN PATENT APPLICATION

(11) **EP 4 756 927 A1**
(43) Date of publication of application: **10.06.2026**
(21) Application number: 24849030.2
(22) Date of filing: 24.07.2024
(51) Int. Cl.: H01M 4/58, H01M 4/62

(54) **NEGATIVE ELECTRODE ACTIVE MATERIAL, NEGATIVE ELECTRODE MATERIAL, AND FLUORIDE ION SECONDARY BATTERY**

(30) Priority: 31.07.2023 JP 2023124986
(71) Applicant: Panasonic Energy Co., Ltd., Moriguchi-shi, Osaka 570-8511 (JP)
(72) Inventor: SHIBUTANI, Satoshi, kadoma-shi, Osaka 571-0057 (JP)
(74) Representative: Novagraaf International SA
(86) International application number: PCT/JP2024/026526
(87) International publication number: WO 2025/028375

(57) **Abstract**

The present disclosure provides a negative electrode active material for a fluoride ion secondary battery, the negative electrode active material including yttrium fluoride, where a crystallite size of the negative electrode active material is more than 7 nm and less than 27 nm. A fluoride ion secondary battery 10 of the present disclosure includes a positive electrode 2, a negative electrode 4, and an electrolyte layer 3 disposed between the positive electrode 2 and the negative electrode 4, where the negative electrode 4 includes the negative electrode active material of the present disclosure.

## Description

### TECHNICAL FIELD

The present invention relates to a negative electrode active material, a negative electrode material, and a fluoride ion secondary battery.

### BACKGROUND ART

Fluoride ion secondary batteries are regarded as promising batteries with higher energy density than lithium ion secondary batteries, and thus, research on such batteries is progressing.

Patent Literature 1 describes a fluoride ion secondary battery using LaF₃ as a negative electrode active material. Patent Literature 2 describes a fluoride ion secondary battery using AlF₃ as a negative electrode active material.

### CITATION LIST

### Patent Literature

Patent Literature 1: JP 2017-84506 A
Patent Literature 2: WO 2019/187943 A1

### SUMMARY OF INVENTION

### Technical Problem

Since Al is a lighter element than La, theoretically AlF₃ is capable of achieving a higher weight energy density than LaF₃. However, AlF₃ has poor electrical conductivity, which may result in a problem that electrochemical reactions are difficult to initiate in AlF₃.

The present disclosure aims to provide a negative electrode active material suitable for a fluoride ion secondary battery.

### Solution to Problem

The present disclosure provides a negative electrode active material for a fluoride ion secondary battery,
the negative electrode active material including yttrium fluoride, wherein
a crystallite size of the negative electrode active material is more than 7 nm and less than 27 nm.

### Advantageous Effects of Invention

According to the present disclosure, a negative electrode active material suitable for a fluoride ion secondary battery can be provided.

### BRIEF DESCRIPTION OF DRAWINGS

FIG. 1A is a schematic cross-sectional view of a fluoride ion secondary battery according to a third embodiment of the present disclosure.
FIG. 1B is a schematic cross-sectional view of a fluoride ion secondary battery according to a variation.
FIG. 2 is a graph showing an X-ray diffraction pattern of a negative electrode active material of Example 1.
FIG. 3A is a graph showing a charge and discharge curve for the first cycle of a fluoride ion secondary battery of Example 1.
FIG. 3B is a graph showing a charge and discharge curve for the first cycle of a fluoride ion secondary battery of Example 2.
FIG. 3C is a graph showing a charge and discharge curve for the first cycle of a fluoride ion secondary battery of Example 3.
FIG. 3D is a graph showing a charge and discharge curve for the first cycle of a fluoride ion secondary battery of Comparative Example 1.
FIG. 3E is a graph showing a charge and discharge curve for the first cycle of a fluoride ion secondary battery of Comparative Example 2.
FIG. 3F is a graph showing a charge and discharge curve for the first cycle of a fluoride ion secondary battery of Comparative Example 3.
FIG. 4 is a graph showing a charge and discharge curve for the first cycle of a fluoride ion secondary battery of Example 4.

### DESCRIPTION OF EMBODIMENTS

### (Findings on which the present disclosure is based)

The present inventor focused on yttrium(III) fluoride (YF₃) as a metal fluoride being capable of achieving a higher weight energy density than LaF₃ and that possessing superior electrical conductivity to AlF₃. However, in an actual fabrication of a fluoride ion secondary battery using yttrium fluoride, the present inventor found that the initial discharge capacity sometimes falls significantly below expectations.

The present inventor diligently investigated fluoride ion secondary batteries using negative electrode active materials including yttrium fluoride. As a result, the present inventor has found that crystallite size relates to the initial discharge capacity, thereby arriving at the technique disclosed herein.

Embodiments of the present disclosure will now be described below with reference to the attached drawings. The present disclosure is not limited to the following embodiments.

### (First embodiment)

A negative electrode active material of the present embodiment, being a negative electrode active material for a fluoride ion secondary battery, includes yttrium fluoride. Yttrium fluoride is a material capable of occluding and releasing fluoride ions in association with charge and discharge of the fluoride ion secondary battery. Yttrium fluoride is the main component of the negative electrode active material. "Main component" means a component present in the largest amount by mass.

The crystallite size of the negative electrode active material is more than 7 nm and less than 27 nm. In the case where the crystallite size is adjusted to this range, a fluoride ion secondary battery using the negative electrode active material of the present embodiment exhibits a high initial discharge capacity. The reason for this effect is not necessarily clear, but the following reason can be speculated. That is, in the case where the crystallite size is excessively large, fluoride ions cannot reach deep into the crystallites, which may result in a decrease in the initial discharge capacity. On the other hand, in the case where the crystallite size is excessively small, ion conductivity decreases due to an increase in grain boundaries and a decrease in the bulk of the yttrium fluoride, resulting in a decrease in the initial discharge capacity.

The crystallite size of the negative electrode active material may be 25 nm or less, and desirably 20 nm or less. The crystallite size of the negative electrode active material may be 10 nm or more and 25 nm or less, or 10 nm or more and 20 nm or less. This configuration enhances the effect of improving the initial discharge capacity.

The negative electrode active material may be in the form of particles. Examples of the form of particles include spherical, elliptical, flake-like, and fibrous.

The crystallite size can be adjusted, for example, by milling a powder of the negative electrode active material. By adjusting the time in the milling process and the rotational speed of the milling apparatus, a negative electrode active material with a desired crystallite size can be obtained. Alternatively, the crystallite size can be adjusted by heat treating a powder of the negative electrode active material. By adjusting the temperature and the time for the heat treatment, a negative electrode active material with a desired crystallite size can be obtained.

The crystallite size can be calculated based on the Scherrer equation from the full width at half maximum of a specific diffraction peak in the X-ray diffraction pattern of the negative electrode active material, measured using Cu-Kα radiation. In the present embodiment, a specific diffraction peak is a peak attributed to a (111) plane of a YF₃ crystal.

The negative electrode active material of the present embodiment may have an orthorhombic crystal structure. The crystal structure of YF₃ is orthorhombic. The space group of the YF₃ crystal is Pnma.

The median diameter (D50) of particles of the negative electrode active material is desirably 7.0 µm or less, more desirably 5.0 µm or less, and further desirably 2.0 µm or less. When the upper limit of the median diameter is smaller, a fluorination reaction of a metal as the negative electrode active material proceeds further during discharge, thereby suppressing the decrease in the initial discharge capacity. The lower limit of the median diameter is, for example, 0.1 µm. The median diameter is determined from the volume-based particle size distribution obtainable by a laser diffraction scattering method.

In the negative electrode active material of the present embodiment, it is desirable that the contents of metal elements other than yttrium be sufficiently reduced. Limiting the content of metal elements other than yttrium is expected to reduce the resistance of the fluoride ion secondary battery and increase the initial discharge capacity. It is particularly desirable that a content of Na is sufficiently low. Although the theoretical capacity of NaF that is a compound of Na and F is as high as 638 mAh/g, the reversibility of NaF is not necessarily favorable. Therefore, it is desirable that the content of Na in the negative electrode active material of the present embodiment is sufficiently low. In one example, the content of Na is desirably less than 80 ppm by mass, and more desirably less than 50 ppm by mass. In the case where the content of Na is reduced, the influence of Na on the fluoride ion secondary battery using the negative electrode active material of the present embodiment is considered to be small. In the present Description, "ppm" denotes a content by mass.

An example of metal element whose content should be limited is Bi. The content of Bi in the negative electrode active material is desirably less than 10 ppm by mass. When the content of Bi is less than 10 ppm, it is expected that the initial discharge capacity of the fluoride ion secondary battery using the negative electrode active material of the present embodiment increases.

The lower limits of the content of Na and the content of Bi are not specifically limited. The content of Na and the content of Bi may be below the detection limit of an analytical instrument.

The contents of metal elements in the negative electrode active material can be quantified using analytical methods such as an ICP (Inductively Coupled Plasma) optical emission spectrometry, an ICP mass spectrometry, or an atomic absorption spectrometry.

Yttrium fluoride is obtained by reacting yttrium(III) oxide or yttrium(III) hydroxide with hydrogen fluoride. Yttrium can be separated from yttrium-containing minerals and purified such that the content of Na in the negative electrode active material is less than 80 ppm. Separation and purification of yttrium can be performed, for example, by ion exchange. Similarly, separation and purification of yttrium from yttrium-containing minerals can be performed such that the content of Bi in the negative electrode active material is less than 10 ppm.

Other examples of metal element the contents thereof should be limited include Al, Mg, Fe, and Zr. A content of Al in the negative electrode active material may be less than 250 ppm by mass. A content of Mg in the negative electrode active material may be less than 100 ppm by mass. A content of Fe in the negative electrode active material may be less than 70 ppm by mass. A content of Zr in the negative electrode active material may be less than 50 ppm by mass. With such a configuration, a fluoride ion secondary battery using the negative electrode active material of the present embodiment is expected to exhibit a high initial discharge capacity.

The lower limits for the contents of Al, Mg, Fe, and Zr are not particularly limited. The contents of Al, Mg, Fe, and Zr may be below the detection limits of an analytical instrument.

The sum of contents of metal elements other than yttrium is desirably less than 500 ppm, more desirably 300 ppm or less, and further desirably 50 ppm or less. With this configuration, it is expected that a fluoride ion secondary battery using the negative electrode active material of the present embodiment will exhibit a high initial discharge capacity.

### (Second embodiment)

A negative electrode material of the present embodiment includes the negative electrode active material described in the first embodiment and a fibrous carbon material. A mixture of the negative electrode active material and the fibrous carbon material is used as the negative electrode material.

According to the findings of the present inventor, use of YF₃ as the negative electrode active material can cause side reactions during charge of the fluoride ion secondary battery, and these side reactions can sometimes hinder the charge of the fluoride ion secondary battery. According to the present embodiment, the fibrous carbon material suppresses the side reactions during charge, thereby potentially increasing the charge capacity of the fluoride ion secondary battery.

Examples of the fibrous carbon material include a solid carbon fiber and a carbon nanotube. Among these, the carbon nanotube is considered particularly effective at suppressing side reactions and is therefore suitable as the negative electrode material in the present embodiment.

The carbon nanotubes may be a single-walled carbon nanotube, a multi-walled carbon nanotube, or a mixture thereof. The single-walled carbon nanotube is a carbon nanotube formed of a single layer of graphene. The multi-walled carbon nanotube is a carbon nanotube having a structure including a plurality of layered tubes formed of graphene. Due to the high effectiveness in suppressing side reactions, the single-walled carbon nanotube is suitable as the negative electrode material in the present embodiment.

Observation of carbon nanotubes using a transmission electron microscope makes it possible to distinguish between a single-walled carbon nanotube and a multi-walled carbon nanotube.

The average diameter of the single-walled carbon nanotube is desirably 1 nm or more and 7 nm or less, and more desirably 3 nm or more and 5 nm or less. The average diameter of the multi-walled carbon nanotube is 300 nm or more and 500 nm or less. The average length of the fibrous carbon material is, for example, 100 µm or more and 600 µm or less. The average diameter and the average length are the average values of the diameters and lengths of a plurality of (for example, 10) fibrous carbon materials. The diameter and the length of the fibrous carbon material may be the values measured for an electron microscopic image of the fibrous carbon material.

In the present embodiment, a ratio M2/M1, expressed as a percentage, of mass M2 of the negative electrode active material to mass M1 of the negative electrode material is desirably 40 mass% or more and 80 mass% or less, more desirably 40 mass% or more and 70 mass% or less, and further desirably 50 mass% or more and 60 mass% or less. A ratio M3/M1, expressed as a percentage, of mass M3 of the fibrous carbon material to the mass M1 of the negative electrode material is desirably 0.5 mass% or more and 15 mass% or less, more desirably 6 mass% or more and 12 mass% or less, and further desirably 8 mass% or more and 10 mass% or less. By appropriately adjusting the ratio M2/M1 and the ratio M3/M1, the effect of suppressing side reactions is enhanced.

In analyzing the fibrous carbon material by Raman spectroscopy, a ratio I_{G}/I_{D} of an intensity I_{G} of a G band to an intensity I_{D} of a D band may be 1.1 or more. The D band is a peak appearing around 1360 cm⁻¹ in the Raman spectrum of the fibrous carbon material, associated with disorder and defects in the graphite structure. The G band is a peak appearing around 1580 cm⁻¹ in the Raman spectrum of the fibrous carbon material, originating from graphite. The ratio I_{G}/I_{D} serves as an indicator of the defect quantity in the fibrous carbon material. A large ratio I_{G}/I_{D} indicates that the fibrous carbon material has few defects. A small ratio I_{G}/I_{D} indicates that the fibrous carbon material has many defects. A fibrous carbon material having fewer defects is considered to exhibit high chemical stability. It is expected that when the chemical stability of the fibrous carbon material is higher, the effect of suppressing side reactions is enhanced. The upper limit of the ratio I_{G}/I_{D} is not specifically limited and is, for example, 100.

The negative electrode material of the present embodiment may include an electrolyte having fluoride ion conductivity. The electrolyte is typically a solid electrolyte. As a solid electrolyte having fluoride ion conductivity, at least one selected from the group consisting of BaₓCa_{y}F_{z} (0.3 < x < 0.7, 0.3 < y < 0.7, 1.5 < z < 2.5) and CeₓSr_{y}F_{z} (0.9 < x <1, 0 < y < 0.1, 2 < z < 3) may be used. BaₓCa_{y}F_{z} and CeₓSr_{y}F_{z} are suitable for the negative electrode material of the present embodiment because both of them have high fluoride ion conductivity.

In the present embodiment, a ratio M4/M1, expressed as a percentage, of mass M4 of the electrolyte to the mass M1 of the negative electrode material is, for example, 24 mass% or more and 48 mass% or less.

The negative electrode material of the present embodiment may also include other materials such as an electroconductive additive other than the fibrous carbon material, and a binder. Examples of electroconductive additives other than the fibrous carbon material include a spherical electroconductive additive such as acetylene black. As the binder, polymeric materials known in the field of battery may be used.

### (Third embodiment)

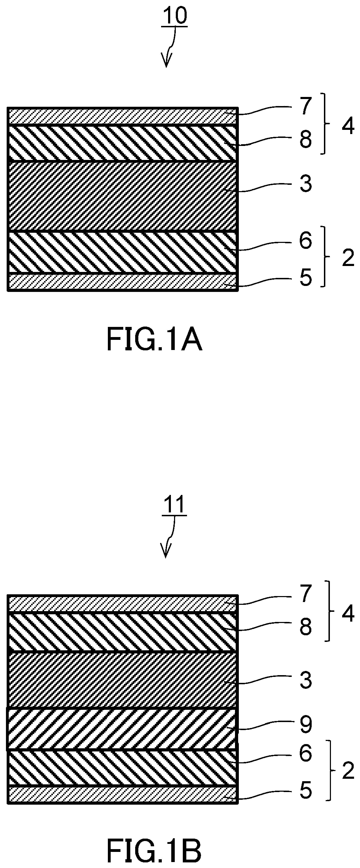

FIG. 1A is a cross-sectional view of a fluoride ion secondary battery 10 according to a third embodiment of the present disclosure. The fluoride ion secondary battery 10 includes a positive electrode 2, a negative electrode 4, and an electrolyte layer 3. The positive electrode 2 has a positive electrode current collector 5 and a positive electrode active material layer 6. The positive electrode active material layer 6 is disposed on the positive electrode current collector 5. The negative electrode 4 has a negative electrode current collector 7 and a negative electrode active material layer 8. The negative electrode active material layer 8 is disposed on the negative electrode current collector 7. The electrolyte layer 3 is disposed between the positive electrode 2 and the negative electrode 4. The positive electrode 2 and the negative electrode 4 face each other across the electrolyte layer 3.

In charging the fluoride ion secondary battery 10, fluoride ions (F⁻) migrate from the negative electrode 4 to the positive electrode 2. A defluorination reaction occurs at the negative electrode 4, while a fluorination reaction occurs at the positive electrode 2. In discharging the fluoride ion secondary battery 10, the fluoride ions migrate from the positive electrode 2 to the negative electrode 4. A fluorination reaction occurs at the negative electrode 4, while a defluorination reaction occurs at the positive electrode 2.

The fluorination reaction and the defluorination reaction include both forms involving chemical reactions between the active material and the fluoride ion, and forms not involving chemical reactions, such as intercalation. The chemical reactions include a reaction to form a compound and a reaction to form a composite not being a compound. Examples of the composite not being a compound include alloys and solid solutions.

The positive electrode current collector 5 is made of a metal material such as copper, chromium, nickel, titanium, platinum, gold, aluminum, tungsten, iron, molybdenum, zirconium, or an alloy containing at least one of these metal materials. In one example, the positive electrode current collector 5 is an aluminum foil coated with a carbon material.

The positive electrode active material layer 6 includes a positive electrode active material. As the positive electrode active material, a material capable of occluding and releasing fluoride ions in association with charge and discharge of the fluoride ion secondary battery is used. As the positive electrode active material, a material having a more positive potential than yttrium is used. The positive electrode active material includes, for example, at least one element selected from the group consisting of Co, Cu, Bi, Sn, Pb, Fe, and C. The positive electrode active material may be a simple substance of an element selected from the group, an alloy containing at least one element selected from the group, a solid solution containing at least one element selected from the group, or a compound containing at least one element selected from the group. The compound is, for example, a fluoride.

The positive electrode active material may be in the form of particles. Examples of the form of particles include spherical, elliptical, flake-like, and fibrous. The particles of the positive electrode active material may have a median diameter (D50) of, for example, 0.2 µm or more and 5.0 µm or less.

The positive electrode active material layer 6 may also include other materials such as a solid electrolyte, an electroconductive additive, or a binder. As the solid electrolyte, the materials described in the second embodiment may be used. Examples of the electroconductive additive include carbon materials such as acetylene black and a carbon nanotube. As the binder, polymer materials known in the field of battery may be used.

The negative electrode current collector 7 is made of a metal material such as copper, chromium, nickel, titanium, platinum, gold, aluminum, tungsten, iron, molybdenum, zirconium, or an alloy containing at least one thereof. In one example, the negative electrode current collector 7 is an aluminum foil coated with a carbon material.

The negative electrode active material layer 8 includes the negative electrode active material described in the first embodiment. With this configuration, the fluoride ion secondary battery 10 exhibits a high initial discharge capacity.

The negative electrode active material layer 8 may also include the negative electrode material described in the second embodiment. With this configuration, the fluoride ion secondary battery 10 exhibits a high initial discharge capacity.

The electrolyte layer 3 includes a material having fluoride ion conductivity. The electrolyte layer 3 may be formed of, for example, a solid electrolyte described in the second embodiment.

In the example shown in FIG. 1A, the fluoride ion secondary battery 10 is a solid-state battery. Alternatively, the fluoride ion secondary battery 10 may be a battery using an electrolyte solution.

In the case where the fluoride ion secondary battery 10 is a battery using an electrolyte solution, the electrolyte layer 3 may be formed of a resin porous membrane, such as a porous membrane of polyolefin. The positive electrode active material layer 6, the negative electrode active material layer 8, and the electrolyte layer 3 are impregnated with the electrolyte solution.

The electrolyte solution includes a solvent and an electrolyte salt.

The solvent is, for example, a non-aqueous solvent. Examples of the non-aqueous solvent include a cyclic ether, a chain ether, a cyclic carbonate ester, a chain carbonate ester, a cyclic carboxylic acid ester, and a chain carboxylic acid ester.

Examples of the cyclic ether include 4-methyl-1,3-dioxolane, 2-methyltetrahydrofuran, and a crown ether. Examples of the chain ether include 1,2-dimethoxyethane, ethylene glycol dimethyl ether, diethylene glycol dimethyl ether, triethylene glycol dimethyl ether, and tetraethylene glycol dimethyl ether. Examples of the cyclic carbonate ester include ethylene carbonate, propylene carbonate, butylene carbonate, fluoroethylene carbonate, and 4,5-difluoroethylene carbonate. Examples of the chain carbonate ester include dimethyl carbonate, ethyl methyl carbonate, and diethyl carbonate. An example of the cyclic carboxylic acid ester is γ-butyrolactone. Examples of the chain carboxylic acid ester include ethyl acetate, propyl acetate, and butyl acetate. One or a mixture of at least two selected from these materials may be used as the non-aqueous solvent.

Examples of the electrolyte salt include an inorganic fluoride salt, an organic fluoride salt, and an ionic liquid.

Examples of the inorganic fluoride salt include lithium fluoride, sodium fluoride, potassium fluoride, rubidium fluoride, cesium fluoride, and ammonium fluoride. Examples of the organic fluoride salt include tetramethylammonium fluoride, neopentyltrimethylammonium fluoride, trineopentylmethylammonium fluoride, tetraneopentylammonium fluoride, 1,3,3,6,6-hexamethylpiperidinium fluoride, 1-methyl-1-propylpiperidinium fluoride, tetramethylphosphonium fluoride, tetraphenylphosphonium fluoride, and trimethylsulfonium fluoride.

Examples of cation of the ionic liquid include 1-ethyl-3-methylimidazolium cation, 1-ethylpyridinium cation, 1-methoxyethyl-1-methylpyrrolidinium cation, N-methyl-N-propylpiperidinium cation, trimethylbutylammonium cation, N,N-diethyl-N-methylmethoxyethylammonium cation, tetrabutylphosphonium cation, triethyl-(2-methoxyethyl)phosphonium cation, triethylsulfonium cation, and diethyl-(2-methoxyethyl)sulfonium cation.

Examples of anion of the ionic liquid include bis(fluorosulfonyl)amide anion, bis(trifluoromethanesulfonyl)amide anion, hexafluorophosphate anion, tris(pentafluoroethyl)trifluorophosphate anion, trifluoromethanesulfonate anion, and tetrafluoroborate anion.

One or a mixture of at least two selected from these materials may be used as the electrolyte salt.

FIG. 1B is a schematic cross-sectional view of a fluoride ion secondary battery according to a variation. A fluoride ion secondary battery 11 further includes a positive electrode buffer layer 9 in addition to the fluoride ion secondary battery 10 described with reference to FIG. 1A. The positive electrode buffer layer 9 is disposed between an electrolyte layer 3 and a positive electrode active material layer 6.

The positive electrode buffer layer 9 is a layer including a positive electrode buffer material. The positive electrode buffer material is, for example, a compound containing the same metal element as the metal contained in the positive electrode active material. With this configuration, the cycle characteristics of the fluoride ion secondary battery 11 can be improved. For example, in the case where the positive electrode active material is lead, the positive electrode buffer material may be Pb₁₋ₐSnₐF₂. Here, the 'a' may satisfy, for example, 0 ≤ a ≤ 1, or may satisfy 0 < a < 1.

### (Other embodiments)

### (Addendum)

The above description of the embodiments discloses the following techniques.

### (Technique 1)

A negative electrode active material for a fluoride ion secondary battery,
the negative electrode active material including yttrium fluoride, wherein
a crystallite size of the negative electrode active material is more than 7 nm and less than 27 nm.

According to the present disclosure, a negative electrode active material suitable for a fluoride ion secondary battery can be provided.

### (Technique 2)

The negative electrode active material according to Technique 1, wherein the crystallite size is 10 nm or more and 25 nm or less. With this configuration, it is expected that a fluoride ion secondary battery using the negative electrode active material of the present embodiment will exhibit a high initial discharge capacity.

### (Technique 3)

The negative electrode active material according to Technique 1 or 2, wherein a content of Na in the negative electrode active material is less than 80 ppm by mass. With this configuration, it is expected that a fluoride ion secondary battery using the negative electrode active material of the present embodiment will exhibit a high initial discharge capacity.

### (Technique 4)

The negative electrode active material according to any one of Techniques 1 to 3, wherein in the negative electrode active material, a sum of contents of metal elements other than yttrium is less than 500 ppm. With this configuration, it is expected that a fluoride ion secondary battery using the negative electrode active material of the present disclosure will exhibit a high initial discharge capacity.

### (Technique 5)

The negative electrode active material according to any one of Techniques 1 to 4, wherein a median diameter of particles of the negative electrode active material is 0.1 µm or more and 5.0 µm or less. When the upper limit of the median diameter is smaller, a fluorination reaction of the metal as the negative electrode active material proceeds further during discharge, thereby suppressing a decrease in the initial discharge capacity.

### (Technique 6)

A negative electrode material including:
the negative electrode active material according to any one of Techniques 1 to 5; and
a fibrous carbon material.

According to the present disclosure, the fibrous carbon material suppresses side reactions during charge, thereby potentially increasing the charge capacity of the fluoride-ion secondary battery.

### (Technique 7)

The negative electrode material according to Technique 6, wherein the fibrous carbon material includes a carbon nanotube. The carbon nanotube, being considered as readily exhibiting an effect of suppressing side reactions, is suitable for the negative electrode material of the present disclosure.

### (Technique 8)

The negative electrode material according to Technique 7, wherein the carbon nanotube includes a single-walled carbon nanotube. The single-walled carbon nanotube is suitable for the negative electrode material of the present disclosure due to its effect of suppressing side reactions.

### (Technique 9)

The negative electrode material according to any one of Techniques 6 to 8, wherein a ratio M3/M1, expressed as a percentage, of mass M3 of the fibrous carbon material to mass M1 of the negative electrode material is 6 mass% or more and 12 mass% or less. Appropriately adjusting the ratio M3/M1 enhances the effect of suppressing side reactions.

### (Technique 10)

The negative electrode material according to any one of Techniques 6 to 9, wherein a ratio M2/M1, expressed as a percentage, of mass M2 of the negative electrode active material to the mass M1 of the negative electrode material is 40 mass% or more and 80 mass% or less. Appropriately adjusting the ratio M2/M1 enhances the effect of suppressing side reactions.

### (Technique 11)

The negative electrode material according to any one of Techniques 6 to 10, further including at least one electrolyte selected from the group consisting of an electrolyte represented by the following composition formula (1) and an electrolyte represented by the following composition formula (2),
BaₓCa_{y}F_{z} (1), where 0.3 < x < 0.7, 0.3 < y < 0.7, and 1.5 < z < 2.5 are satisfied, and
CeₓSr_{y}F_{z} (2), where 0.9 < x < 1, 0 < y < 0.1, and 2 < z < 3 are satisfied. BaₓCa_{y}F_{z} and CeₓSr_{y}F_{z}, are suitable for the negative electrode material of the present disclosure because both of which have high fluoride ion conductivity.

### (Technique 12)

A fluoride ion secondary battery including:
a positive electrode;
a negative electrode; and
an electrolyte layer disposed between the positive electrode and the negative electrode, wherein
the negative electrode includes the negative electrode active material according to any one of Techniques 1 to 5.

With this configuration, the fluoride ion secondary battery exhibits a high initial discharge capacity.

### EXAMPLES

Five types of YF₃ powders were prepared to be used in Examples and Comparative Examples: YF₃ powder A (manufactured by Sigma-Aldrich Corporation); YF₃ powder B (manufactured by Sigma-Aldrich Corporation); YF₃ powder C (manufactured by KANTO CHEMICAL CO., LTD.); YF₃ powder D (manufactured by Sigma-Aldrich Corporation); YF₃ powder E (manufactured by Angene International Limited); and YF₃ powder F (manufactured by Angene International Limited). Quantitative analyses of the elements contained in each of YF₃ powders A through E were performed. For analyzing Na, an atomic absorption spectrophotometer (AA240FS manufactured by VARIAN Co., Ltd.) was used. For analyzing Bi, an ICP mass spectrometer (7700x manufactured by Agilent Technologies Inc.) was used. For analyzing Al, Mg and Fe, an ICP spectrophotometer (ICPS-8100 manufactured by Shimadzu Corporation) was used. The results showed that the purity of YF₃ in the powders A through E was 99.99 mass% or higher. The content of Na, the content of Bi, the content of Al, the content of Mg, and the content of Fe in the YF₃ powders A through D were all below the detection limits of the respective analytical instruments. The content of Na in the YF₃ powder E was 80 ppm, the content of Bi was below the detection limit of the analytical instrument, the content of Al was 250 ppm, the content of Mg was 100 ppm, and content of Fe was 70 ppm. In the YF₃ powder E, the sum of the contents of Na, Bi, Al, Mg, and Fe was 500 ppm.

In the following Examples and Comparative Examples, a planetary ball mill "PL-7 manufactured by Fritsch GmbH" was used. The container and the balls of the planetary ball mill were made of silicon nitride. As a heat treatment apparatus, "KSL-1100X manufacture by MTI Corporation" was used. The sample container was made of alumina.

### (Example 1)

A YF₃ powder (manufactured by Sigma-Aldrich Corporation) was milled using the planetary ball mill. This yielded a negative electrode active material (YF₃ powder A) of Example 1. The ball mill rotation speed during the milling process was 800 rpm. During the milling process, a 15-minute operation and a 5-minute rest were repeated 40 times. The median diameter (D50) of particles of the negative electrode active material of Example 1 was 5.0 µm.

### (Example 2)

A YF₃ powder (manufactured by Sigma-Aldrich Corporation) was milled using a planetary ball mill under the same conditions as in Example 1. A heat treatment was then performed in an argon atmosphere at 300°C for 1 hour. This yielded a negative electrode active material (YF₃ powder B) of Example 2.

### (Example 3)

A YF₃ powder (manufactured by Angene International Limited) was milled using a planetary ball mill under the same conditions as in Example 1, and heat treated under the same conditions as in Example 2. This yielded a negative electrode active material (YF₃ powder E) of Example 3.

### (Comparative Example 1)

A YF₃ powder (manufactured by KANTO CHEMICAL CO., LTD.) was milled using a planetary ball mill under the same conditions as in Example 1. This yielded a negative electrode active material (YF₃ powder C) of Comparative Example 1.

### (Comparative Example 2)

A YF₃ powder (manufactured by Sigma-Aldrich Corporation) was milled using a planetary ball mill under the same conditions as in Example 1. A heat treatment was then performed in an argon atmosphere at 400°C for 1 hour. This yielded a negative electrode active material (YF₃ powder D) of Comparative Example 2.

### (Comparative Example 3)

A YF₃ powder (manufactured by Angene International Limited) was milled using a planetary ball mill under the same conditions as in Example 1, and heat treated under the same conditions as in Comparative Example 2. This yielded a negative electrode active material (YF₃ powder F) of Comparative Example 3.

### [Powder X-ray diffraction measurement]

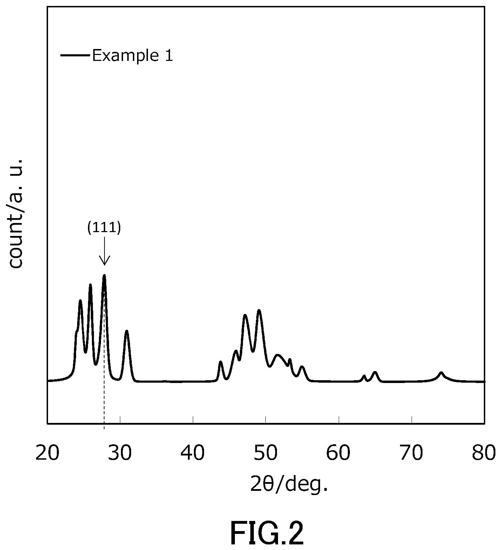

Powder X-ray diffraction measurement was performed on the negative electrode active materials of Examples and Comparative Examples. The measurement conditions were as follows. FIG. 2 shows an X-ray diffraction pattern of the negative electrode active material of Example 1.

### SmartLab manufactured by Rigaku Corporation

Source: Cu Kα radiation (45 kV, 200 mA)
Detector: HyPix-3000
Scan step: 0.02 deg
Scan speed: 4 deg/min
2θ: 20 to 80 deg

The crystallite size was calculated from the full width at half maximum of the diffraction peak attributed to a (111) plane of YF₃. Software "PDXL2" manufactured by Rigaku Corporation was used for calculating the crystallite size. The diffraction peak attributed to the (111) plane of YF₃ is a peak appearing at a diffraction angle 2θ of approximately 27.8 degrees. The results are shown in Table 1.

**[Table 1]**

| | Type of YF₃ powder | Crystallite size (nm) |
|---|---|---|
| Example 1 | A | 10 |
| Example 2 | B | 20 |
| Example 3 | E | 20 |
| Example 4 | B | 20 |
| Comparative Example 1 | C | 7 |
| Comparative Example 2 | D | 27 |
| Comparative Example 3 | F | 27 |

### [Production of solid electrolyte]

A CaF₂ powder (manufactured by Kojundo Chemical Laboratory Co., Ltd.) and a BaF₂ powder (manufactured by Kojundo Chemical Laboratory Co., Ltd.) were mixed in a molar ratio of CaF₂ : BaF₂ = 1:1 to prepare a mixture. The mixture was milled using a planetary ball mill. This yielded a solid electrolyte represented by a composition formula Ca_{0.5}Ba_{0.5}F₂ (hereinafter referred to as BCF). The ball mill rotation speed during the milling process was 800 rpm. During the milling process, a 60-minute operation and a 5-minute rest were repeated 10 times.

### [Production of negative electrode material]

The BCF and a carbon nanotube (CNT) as an electroconductive additive were mixed at a mass ratio of BCF:CNT = 4:1 to prepare a mixture. The mixture was milled using a planetary ball mill. The ball mill rotation speed during the milling process was 800 rpm. During the milling process, a 30-minute operation and a 5-minute rest were repeated 20 times. The negative electrode active material of Example 1 was added to the obtained material and dispersed. This yielded the negative electrode material of Example 1. A mass ratio of the negative electrode active material to the negative electrode material was 55%. By the same process, the negative electrode materials for Example 2, Example 3, Comparative Example 1, Comparative Example 2, and Comparative Example 3 were obtained. A single-walled carbon nanotube (manufactured by Zeon Corporation) was used as the carbon nanotube.

### [Production of positive electrode buffer material]

A PbF₂ powder (manufactured by Kojundo Chemical Laboratory Co., Ltd.) and a SnF₂ powder (manufactured by Kojundo Chemical Laboratory Co., Ltd.) were mixed at a mass ratio of PbF₂ : SnF₂ = 15:7 to prepare a mixture. The mixture was milled using a planetary ball mill. This yielded a compound represented by a composition formula Pb_{0.58}Sn_{0.42}F₂ (hereinafter referred to as PSF). The ball mill rotation speed during the milling process was 600 rpm. During the milling process, a 15-minute operation and a 5-minute rest were repeated 40 times.

The PSF and acetylene black (manufactured by Denka Company Limited) as an electroconductive additive were mixed at a mass ratio of PSF : acetylene black = 14:1 to prepare a mixture. The mixture was milled using a planetary ball mill. This yielded a positive electrode buffer material including the PSF and the acetylene black. The ball mill rotation speed during the milling process was 600 rpm. During the milling process, a 15-minute operation and a 5-minute rest were repeated 12 times.

### [Production of fluoride ion secondary battery]

4 mg of the negative electrode material of Example 1, 50 mg of the BCF, 50 mg of the positive electrode buffer material, a lead foil as a positive electrode active material (manufactured by Nilaco Corporation, thickness: 200 µm), and an aluminum foil as a positive current collector (manufactured by Nilaco Corporation, thickness: 10 µm) were placed in this order into a cylindrical mold with a diameter of 10 mm, and pressed. A platinum foil as a negative current collector (manufactured by Nilaco Corporation, thickness: 20 µm) was placed on the layer of the negative electrode material. This yielded a fluoride ion secondary battery of Example 1. Using the negative electrode materials of Example 2, Example 3, Comparative Example 1, Comparative Example 2, and Comparative Example 3, fluoride ion secondary batteries for Example 2, Example 3, Comparative Example 1, Comparative Example 2, and Comparative Example 3 were obtained by the same method as in Example 1.

### [Measurement of initial discharge capacity of fluoride ion secondary battery]

The initial discharge capacity of the fluoride ion secondary batteries of Examples and Comparative Examples was measured using a potentiogalvanostat (SP300 manufactured by Bio-Logic SAS). The fluoride ion secondary battery was placed in a vacuum thermostatic chamber at 150°C, and constant current charge was performed at a current of 40 µA and at a cut-off voltage of -2.7 V. Later, constant current discharge was performed at a current of 40 µA and at a cut-off voltage of -0.05 V.

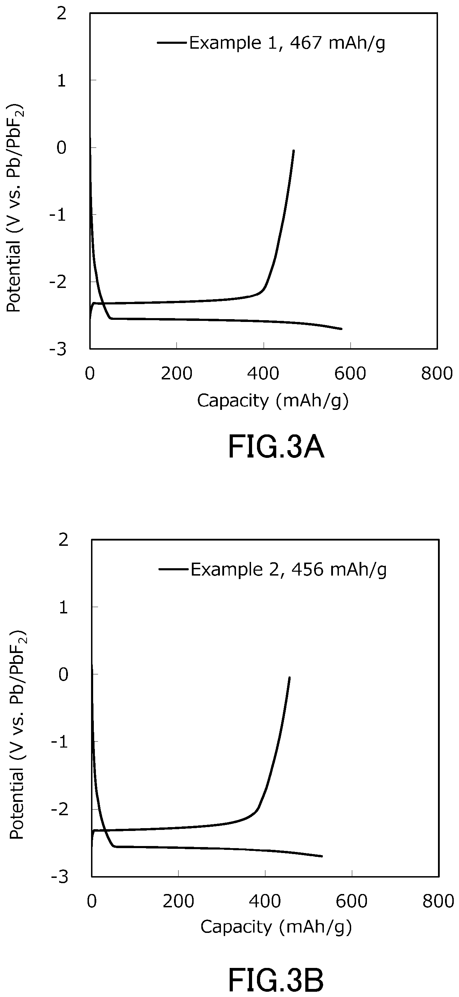

FIG. 3A to FIG. 3F are graphs showing the charge and discharge curves for the first cycle of the fluoride ion secondary batteries of Example 1, Example 2, Example 3, Comparative Example 1, Comparative Example 2, and Comparative Example 3, respectively. The horizontal axis of the graph represents the capacity per unit mass of the negative electrode active material, indicating the charged or discharged quantity of electricity. The vertical axis of the graph represents potential of the negative electrode referenced to the redox equilibrium potential between lead and lead fluoride.

As shown in FIG. 3A and FIG. 3B, the initial discharge capacity of the fluoride ion secondary batteries of Example 1 and Example 2 was high. The initial discharge capacity of the fluoride ion secondary battery of Example 1 was 467 mAh/g. The initial discharge capacity of the fluoride ion secondary battery of Example 2 was 456 mAh/g. The charge and discharge curves were smooth, indicating suppressed side reactions. The theoretical capacity of the fluoride ion secondary battery of Example 1 is 551 mAh/g.

For the fluoride ion secondary battery of Example 1, the cross-section of the negative electrode active material after discharge was analyzed using SEM-EDX (scanning electron microscope energy dispersive X-ray spectroscopy). In an active material with larger particle diameters, the interior of particle showed insufficient progress in the fluorination reaction to form metal from a charged state, compared to the surface region. This may indicate that when the upper limit of the median diameter is smaller, the fluorination reaction of the metal as the negative electrode active material further proceeds during discharge, thereby suppressing the decrease in the initial discharge capacity.

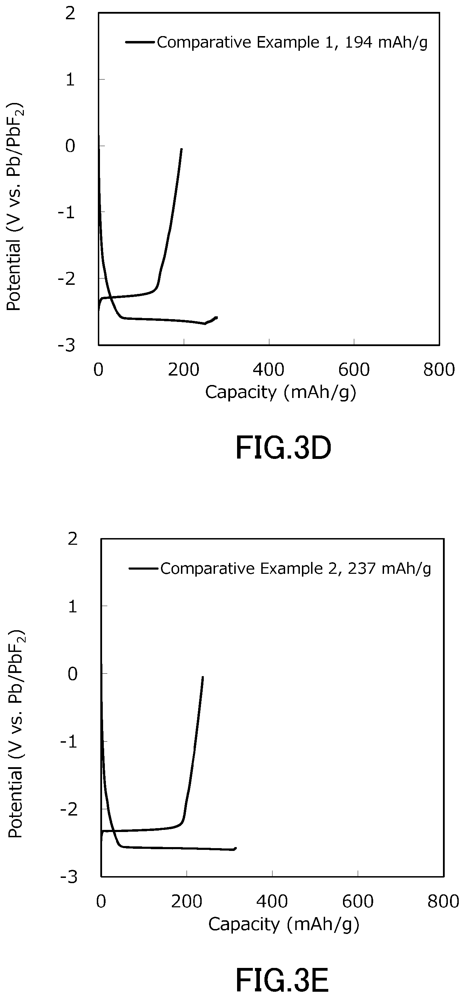

As shown in FIG. 3D and FIG. 3E, the initial discharge capacity of the fluoride ion secondary batteries in Comparative Example 1 and Comparative Example 2 were low. The initial discharge capacity of the fluoride ion secondary battery of Comparative Example 1 was 194 mAh/g. The initial discharge capacity of the fluoride ion secondary battery of Comparative Example 2 was 237 mAh/g. In the charge curve of Comparative Example 1, a step (around 250 mAh/g) possibly caused by side reactions was found. In the charge curve of Comparative Example 2, a step (around 300 mAh/g) possibly caused by side reactions was found. In Comparative Example 1 and Comparative Example 2, the end point of charge could not be determined, and thus, the charge was stopped manually.

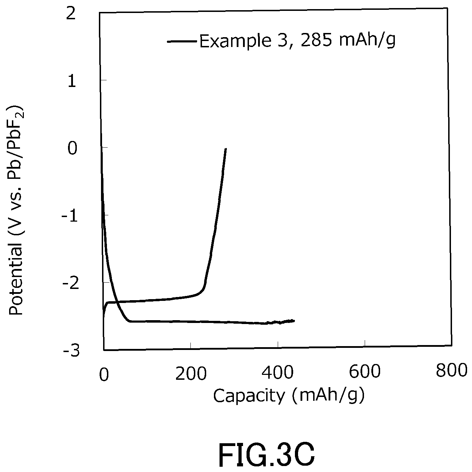

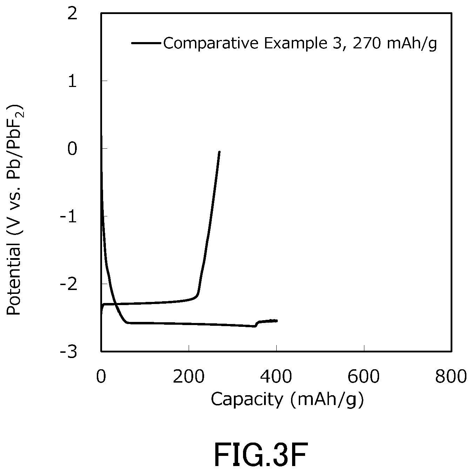

As shown in FIG. 3C and FIG. 3F, the initial discharge capacity of the fluoride ion secondary battery of Example 3 was higher than the initial discharge capacity of the fluoride ion secondary battery of Comparative Example 3. The initial discharge capacity of the fluoride ion secondary battery of Example 3 was 285 mAh/g. The initial discharge capacity of the fluoride ion secondary battery of Comparative Example 3 was 270 mAh/g. In the charge curve of Example 3, a step (around 400 mAh/g) possibly caused by side reactions was found. In the charge curve of Comparative Example 3, a step (around 350 mAh/g) possibly caused by side reactions was found. In Example 3 and Comparative Example 3, the end point of charge could not be determined, and thus, the charge was stopped manually.

In comparison between Example 2 (FIG. 3B) and Example 3 (FIG. 3C) which have the same crystallite size, the initial discharge capacity of the fluoride ion secondary battery of Example 2 using the YF₃ powder B was higher than the initial discharge capacity of the fluoride ion secondary battery of Example 3 using the YF₃ powder E. The YF₃ powder B had a content of Na of less than 80 ppm by mass, while the YF₃ powder E had a content of Na of 80 ppm by mass. Therefore, it is desirable that the content of Na in the YF₃ powder be sufficiently low.

### (Example 4)

A fluoride ion secondary battery of Example 4 was produced by the same method as in Example 2, except that acetylene black (manufactured by Denka Company Limited) as an electroconductive additive was used in place of the carbon nanotube in production of the negative electrode material.

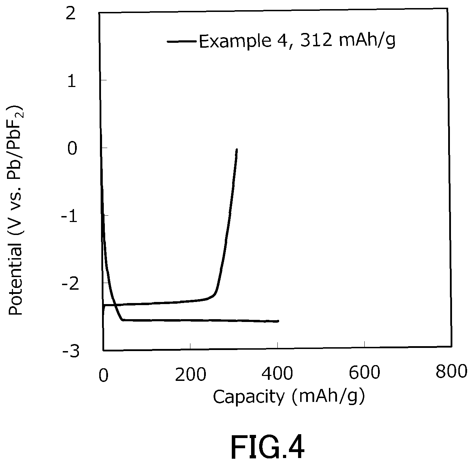

The initial discharge capacity of the fluoride ion secondary battery of Example 4 was measured by the method described earlier. FIG. 4 is a graph showing a charge and discharge curve for the first cycle of the fluoride ion secondary battery of Example 4. The initial discharge capacity of the fluoride ion secondary battery of Example 4 was 312 mAh/g. In the charge curve of Example 4, a step (around 400 mAh/g) possibly caused by side reactions was found. In Example 4, the end point of charge could not be determined, and thus, the charge was stopped manually.

As shown in FIG. 4, the initial discharge capacity of the fluoride ion secondary battery of Example 4 was higher than the initial discharge capacity of the fluoride ion secondary batteries of Comparative Examples 1 to 3.

In comparison between Example 2 (FIG. 3B) and Example 4 (FIG. 4), the initial discharge capacity of Example 2 using a carbon nanotube as an electroconductive additive was higher than the initial discharge capacity of Example 4 using acetylene black as an electroconductive additive. This may indicate that a fluoride ion secondary battery using a carbon nanotube as an electroconductive additive in the negative electrode material is more likely to exhibit an effect of suppressing side reactions than a fluoride ion secondary battery using acetylene black as an electroconductive additive in the negative electrode material.

### INDUSTRIAL APPLICABILITY

The techniques disclosed herein are useful for a fluoride ion secondary battery.

## Claims

1. A negative electrode active material for a fluoride ion secondary battery,
the negative electrode active material comprising yttrium fluoride, wherein
a crystallite size of the negative electrode active material is more than 7 nm and less than 27 nm.

2. The negative electrode active material according to claim 1, wherein
the crystallite size is 10 nm or more and 25 nm or less.

3. The negative electrode active material according to claim 1, wherein
a content of Na in the negative electrode active material is less than 80 ppm by mass.

4. The negative electrode active material according to claim 1, wherein
in the negative electrode active material, a sum of contents of metal elements other than yttrium is less than 500 ppm.

5. The negative electrode active material according to claim 1, wherein
a median diameter of particles of the negative electrode active material is 7.0 µm or less.

6. A negative electrode material comprising:
the negative electrode active material according to claim 1; and
a fibrous carbon material.

7. The negative electrode material according to claim 6, wherein
the fibrous carbon material comprises a carbon nanotube.

8. The negative electrode material according to claim 7, wherein
the carbon nanotube comprises a single-walled carbon nanotube.

9. The negative electrode material according to claim 6, wherein
a ratio M3/M1, expressed as a percentage, of mass M3 of the fibrous carbon material to mass M1 of the negative electrode material is 6 mass% or more and 12 mass% or less.

10. The negative electrode material according to claim 9, wherein
a ratio M2/M1, expressed as a percentage, of mass M2 of the negative electrode active material to the mass M1 of the negative electrode material is 40 mass% or more and 80 mass% or less.

11. The negative electrode material according to any one of claims 6 to 10, further comprising at least one electrolyte selected from the group consisting of an electrolyte represented by the following composition formula (1) and an electrolyte represented by the following composition formula (2),
BaₓCa_{y}F_{z} (1), where 0.3 < x < 0.7, 0.3 < y < 0.7, and 1.5 < z < 2.5 are satisfied, and
CeₓSr_{y}F_{z} (2), where 0.9 < x < 1, 0 < y < 0.1, and 2 < z < 3 are satisfied.

12. A fluoride ion secondary battery comprising:
a positive electrode;
a negative electrode; and
an electrolyte layer disposed between the positive electrode and the negative electrode, wherein
the negative electrode comprises the negative electrode active material according to any one of claims 1 to 5.
